# EUROPÄISCHE PATENTSCHRIFT

(11) **EP 1 040 550 B1**
(45) Veröffentlichungstag und Bekanntmachung des Hinweises auf die Patenterteilung: **11.02.2004**
(21) Anmeldenummer: 98965771.3
(22) Anmeldetag: 05.12.1998
(51) Int. Cl.: H02K 3/28, H02K 21/22, H02K 3/52, H02K 1/14

(54) **BÜRSTENLOSER, ELEKTRONISCH KOMMUTIERTER MOTOR**
BRUSHLESS ELECTRONIC COMMUTED MOTOR
MOTEUR SANS BALAI A COMMUTATION ELECTRONIQUE

(30) Priorität: 20.12.1997 DE 19757136
(43) Veröffentlichungstag der Anmeldung: 04.10.2000
(73) Patentinhaber: TEMIC Automotive Electric Motors GmbH, 26133 Oldenburg (DE)
(72) Erfinder: WITTHOHN, Lutz, D-26135 Oldenburg (DE); FINDEISEN, Antje, D-26131 Oldenburg (DE); VON KNORRE, Dietrich, D-26121 Oldenburg (DE); BERG, Günter, D-13465 Berlin (DE); GROSS, Dieter, D-12167 Berlin (DE)
(74) Vertreter: Graf, Ulrich
(86) Internationale Anmeldenummer: PCT/EP1998/007917
(87) Internationale Veröffentlichungsnummer: WO 1999/033157

(56) Entgegenhaltungen:
- EP-A- 0 588 448
- EP-A- 0 777 312
- DE-A- 3 638 228
- US-A- 5 231 324
- PATENT ABSTRACTS OF JAPAN vol. 096, no. 003, 29. März 1996 & JP 07 298544 A (NIPPON DENSAN CORP), 10. November 1995

## Beschreibung

Die Erfindung betrifft einen bürstenlosen, elektronisch kommutierten Motor der im Oberbegriff des Patentanspruchs 1 angegebenen Art.

Auf einer Reihe von Anwendungsgebieten treten elektronisch gesteuerte Elektromotoren immer stärker in den Vordergrund. Hierbei handelt es sich um Elektromotoren, bei denen das erforderliche, periodische Schalten von Spulen nicht mehr durch einen Kommutator, sondern durch elektronische Schalteinrichtungen vorgenommen wird. Zu den elektronischen Schalteinrichtungen können, z. B. geeignete Sensoren gehören, die feststellen, wann der Stator und der Läufer für die gerade zu schaltenden Spulen sich in einer schaltungsgünstigen bzw. schaltungserfordernden Relativstellung befinden. Es versteht sich, daß die elektronischen Schalteinrichtungen auch dafür sorgen müssen, daß die Stromzuführungen zu dem bzw. den jeweiligen Spulen in der gerade passenden Stromrichtung erfolgen.

Es sind auch bereits elektronisch gesteuerte Elektromotoren bekannt, bei denen entweder für die Statorpole oder für die Läuferpole Dauermagnete eingesetzt worden sind. Dauermagnete bieten hierbei eine Reihe von Vorteilen, wie Fehlen von Stromverbrauch, geringe Abmessungen und einfache Herstellung und Montage. Derartige Elektromotoren werden heutzutage auf vielen technischen Gebieten eingesetzt, so z. B. auch im Kraftfahrzeugwesen als Antriebsmotor für Kühlertüfter oder Servovorrichtungen. Insbesondere in längs zur Fahrtrichtung eingebauten Verbrennungsmotoren in Kraftfahrzeugen ist der Einbauraum für einen elektrisch betriebenen Ventilator zur Kühlung des Kühlers sehr begrenzt. Konventionelle Dauermagnetmotoren lassen sich wegen ihrer großen axialen Baulänge nicht einsetzen.

Durch die DE 35 42 542 A1 ist ein Plattenspeicherantrieb mit einem kollektorlosen Antriebsmotor bekannt, der einen mit einer Wicklung versehenen Stator und einen den Stator unter Bildung eines Luftspalts koaxial umgreifenden Außenrotor mit einem permanentmagnetischen Motormagneten aufweist. Da die Wicklungsspulen hierbei in jedem Wicklungsstrang in Reihe geschaltet sind, fließt auch ein höherer Strom durch die Wicklungsspulen. Dieses wiederum bedingt eine Stromverdrängung, die zu einem schlechteren Wirkungsgrad führt. Weiterhin weist dieser Stand der Technik nur zwei Polpaare auf, wodurch aufgrund der höheren Rastmomente auch höhere Geräusche erzeugt werden.

Weiterhin zeigt die DE-AS 1 613 005 einen kollektorlosen Gleichstrommotor mit einem ein- oder vielpolpaarigen Permanentmagnetläufer und mit mehreren stationären Wicklungssträngen, die mittels einer Steuerschaltung nacheinander an eine konstante Gleichstromquelle anschließbar sind. Vorteilhaft ist hierbei die Motorwelle direkt als Tonquelle eines Tonbandgerätes ausgebildet, wobei diese Tonwelle auf verschiedene Drehzahlen zur Erzielung unterschiedlicher Bandgeschwindigkeiten umschaltbar ist. Die Wicklungsspulen liegen bei diesem Motor nicht in den Nuten des Stators und unterliegen daher auch nicht der Stromverdrängung.

Die deutsche Offenlegungsschrift DE 36 38 228 A1 offenbart ein Schenkelblechpaket für eine dynamoelektrische Maschine und insbesondere ein Verfahren zum Herstellen eines Schenkelpolmotors mit einem elektronisch kommutierten Kommutatormotor zum Antrieb einer Waschmaschine. Hierdurch ist eine Leiterplatte bekannt, die mit den Enden von konzentrierten Wicklungen verbunden ist. Diese Wicklungen werden in wenigstens einer vorgewählten Sequenz elektronisch kommutiert, um die Erregung des Elektromotors zu bewirken. Hierbei wird insbesondere eine Schaltplatte mit Leiterbahnen zur Verbindung der einzelnen Spulen verwendet.

Weiterhin wird durch die EP-A-777312 ein Stator für Elektromotoren offenbart, der aus einem Statorblechpaket, Statorwicklungen und einer an einer Stirnseite des Statorblechpaketes angeordneten Verschaltungsanordnung für die Statorwicklungen besteht. Hierdurch wird ein bürstenloser Motor offenbart, bei dem die Verschaltungsanordnung ein Isolierteil mit nutenförmigen Kammern für die Aufnahme von elektrischen, gegeneinander isolierten Verbindungsleitern für die Verschaltung der Wicklungsdrahtenden der Statorwicklungen aufweist Hierbei ist aber keine Sternschaltung mit einem Sternpunkt vorgesehen.

Weiterhin ist durch die EP-A-777312 ein bürstenloser Elektromotor bekannt, bei dem eine Schaltplatte mit Stromschienen zur Verbindung der einzelnen Wicklungsspulen vorgesehen ist, und jeder Wicklungsstrang aus mehreren parallel geschalteten Wicklungsspulen besteht
Auch hierbei ist keine Stromschiene zum Verbinden des Sternpunktes einer Sternschaltung mit den Enden aller Wicklungsspulen vorgesehen.

Der Erfindung liegt die Aufgabe zugrunde, einen bürstenlosen, elektronisch kommutierten Motor dahingehend zu verbessern, daß er bei einer axialen Flachbauweise eine einfache Fertigung und ein geringes Gewicht sowie einen hohen Wirkungsgrad hat. Diese Aufgabe wird durch die im Patentanspruch 1 gekennzeichneten Merkmale gelöst.

Der erfindungsgemäße EC-Motor hat durch die gesehnten Wicklungen den Vorteil, daß eine Überlappung der Wickelköpfe vermieden wird, was sich insbesondere auf eine geringe axiale Baulänge auswirkt.

Da die Spulen eines Wicklungsstranges parallel geschaltet sind, reduziert sich der Leiterquerschnitt eines Wicklungsstranges so weit, daß nicht mehrere parallel geschaltete Lagen innerhalb einer Wicklungsnut notwendig werden. Jeder Wicklungsstrang hat daher mehrere parallele Stromzweige. Vorteilhaft ist bei dieser Parallelschaltung der Spulen, daß eine Stromverdrängung in den Wicklungsnuten, wie sie von Asynchronläufern bekannt ist, reduziert wird. Hierdurch wird der Wirkungsgrad des Motors verbessert.

Vorteilhafte Weiterbildungen der Erfindung sind den Unteransprüchen zu entnehmen.

Weitere vorteilhafte Ausgestaltungen des Erfindungsgegenstandes sind den weiteren Unteransprüchen zu entnehmen.
Es zeigen:
- Figur 1: einen Schnitt durch einen EC-Motor,
- Figur 2: eine Draufsicht auf einen Statorpol,
- Figur 3: eine Draufsicht auf einen Spulenkörper,
- Figur 4: einen Statorpol mit einem Spulkörper und einer Wicklung,
- Figur 5: eine Draufsicht auf ein Rückschlußteil des Stators,
- Figur 6: eine Draufsicht auf den Stator und Läufer,
- Figur 7: ein Wicklungsschema eines EC-Motors mit 12 Wicklungsnuten,
- Figur 8: ein Wicklungsschema für einen 12-nutigen Stator mit vier Stromschienen,
- Figur 9: eine Draufsicht auf eine Schaltplatte mit vier Stromschienen und
- Figur 10 - 13: Einzelheiten aus Figur 9

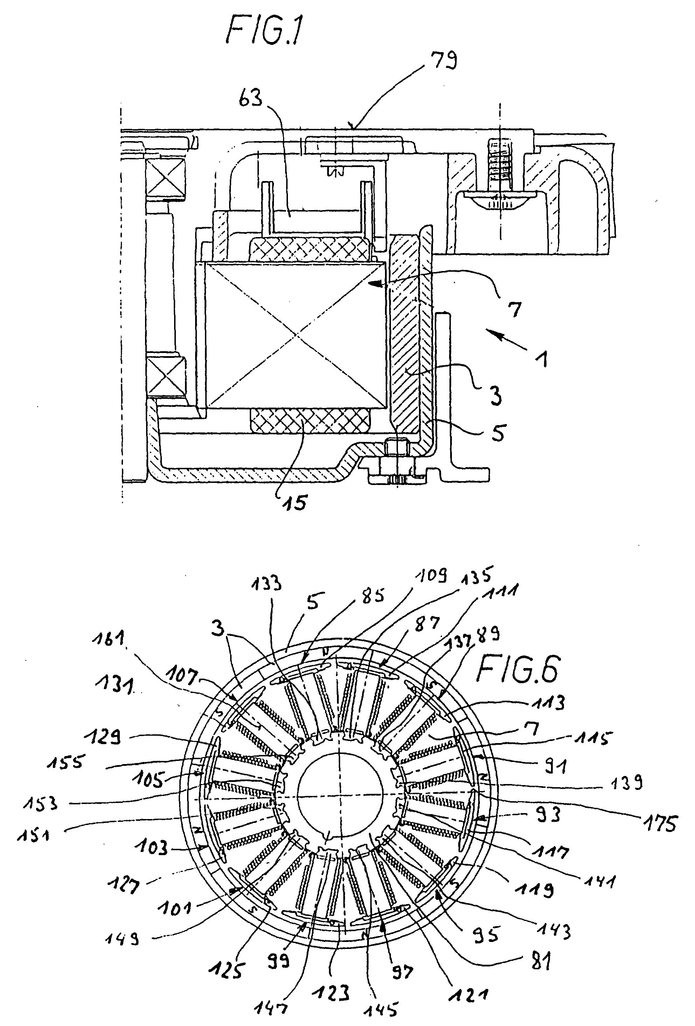

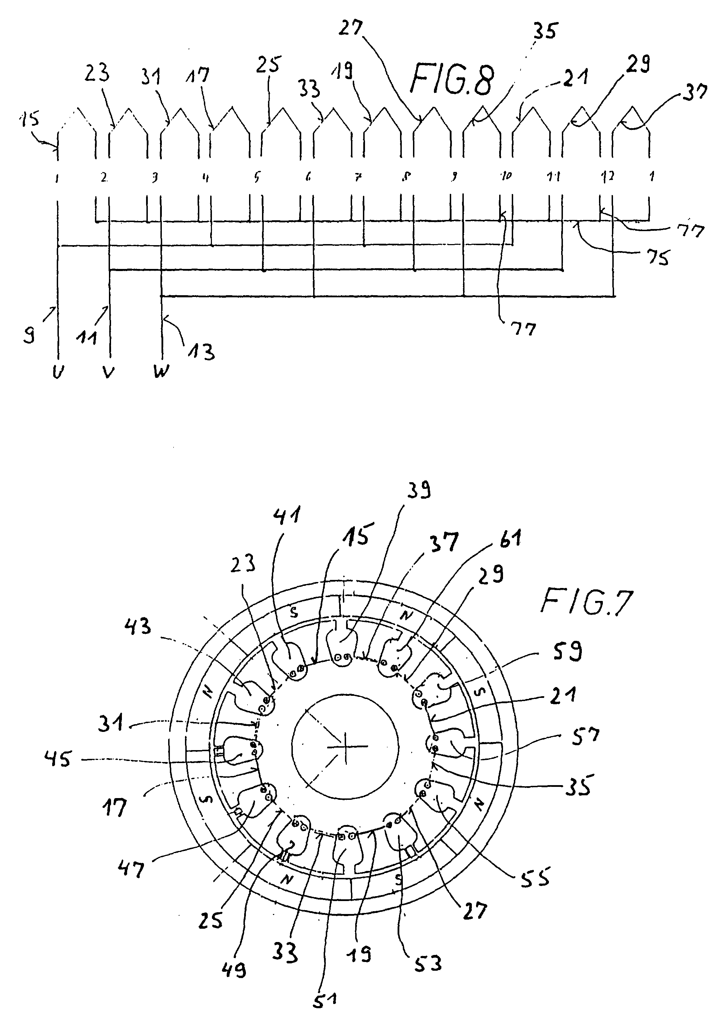

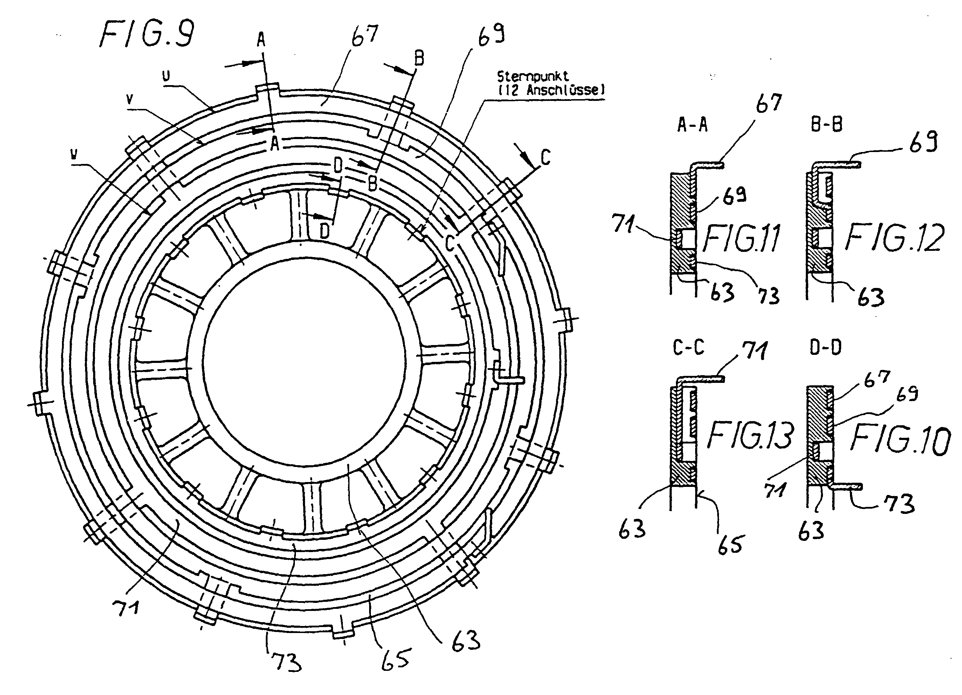

Die Figur 1 zeigt einen Teilschnitt durch einen bürstenlosen, elektronisch kommutierten Motor, auch EC-Motor 1 genannt, der insbesondere als Antriebsmotor für einen Kfz-Lüfterantrieb mit einem Permanentmagnete 3 aufweisenden Außenrotor 5 dient, in dem ein Stator 7 mit drei um 120° versetzten Wicklungssträngen 9, 11, 13 angeordnet ist. Jeder Wicklungsstrang 9, 11, 13 hat gemäß den Figuren 7 und 8 z. B. 4 parallel geschaltete Wicklungsspulen 15, 17, 19, 21, 23, 25, 27, 29, 31, 33, 35, 37, welche in 12 Wicklungsnuten 39, 41, 43, 45, 47, 49, 51, 53, 55, 57, 59, 61 des Stators 7 gewickelt sind. Da der Außenrotor 5 vier Polpaare aufweist, ist die Spulenweite jeder Wicklungsspule 15 - 37 kleiner als die Polteilung. Außerdem sind 0,5 Spulen je Pol und Strang gewickelt. Die Spulenweite der Wicklungsspulen 15 - 37 beträgt gemäß Figur 7 insbesondere 2/3 der Polteilung. Dieses ergibt, daß jede Überlappung von Wickelköpfen der Wicklungsspulen 15 - 37 vermieden wird. Durch die geringe Höhe der Wickelköpfe wird die axiale Baulänge des EC-Motors 1 reduziert.

Die Figur 8 zeigt, daß jeder Wicklungsstrang 9, 11, 13 aus z. B. vier parallel geschalteten Wicklungsspulen 15 - 37 besteht. Im Rahmen der Erfindung entspricht die Anzahl der parallel geschalteten Wicklungsspulen 15 - 37 der Anzahl der Polpaare p. Durch die Parallelschaltung der Wicklungsspulen 15 - 37 wird der Strangstrom auf mehrere parallele Stromzweige verteilt, wodurch der Leiterquerschnitt eines Wicklungsstranges 9, 11, 13 so weit reduziert werden kann, daß nicht mehr mehrere parallel geschaltete Lagen in einer Wicklungsnut 39 - 61 notwendig werden. Dieses bewirkt, daß eine Stromverdrängung in den Wicklungsnuten 39 - 61, wie sie von Asynchronläufern her bekannt ist, reduziert wird.

Zur Parallelschaltung der Wicklungsspulen 15 - 37 der einzelnen Wicklungsstränge 9, 11, 13 ist gemäß den Figuren 9 - 13 eine Schaltplatte 63 aus einem Isoliermaterial vorgesehen, in deren Oberfläche 65 vier Stromschienen 67, 69, 71, 73 eingebettet sind. Hierbei ist jedem Wicklungsstrang 9, 11, 13 je eine Stromschiene 67, 69, 71 zum Verbinden der Anfänge der parallel geschalteten Wicklungsspulen 15 - 17 zugeordnet. Die vierte Stromschiene 73 dient zum Verbinden des Sternpunktes 75 mit den Enden 77 aller Wicklungsspulen 15 - 37 der drei Wicklungsstränge 9, 11, 13. Die Schaltplatte 63 mit den vier Stromschienen 67, 69, 71, 73 ist gemäß Figur 1 zusammen mit dem Stator 7 mit einem Motorträger 79 verbunden und ermöglicht eine Automatisierung der Fertigung.

Der Stator 7 besteht gemäß den Figuren 5 und 6 vorteilhaft aus einem hohlzylinderförmigen Rückschlußteil 81 mit auf dessen Außenumfangsfläche 83 in Längsrichtung angeordneten Statorpolen 85, 87, 89, 91, 93, 95, 97, 99, 101, 103, 105, 107, welche mittels einer Preßverbindung mit dem Rückschlußteil 81 fest verbunden sind. Diese Statorpole 85 - 107 und das Rückschlußteil 81 bestehen aus gestanzten Blechteilen, welche durch eine Stanzpakettierung zusammengehalten werden.

Die feste Verbindung der Statorpole 85 - 107 mit dem Rückschußteil 81 wird auf einfachste Weise dadurch erzielt, daß die Statorpole 85 -- 107 an ihren den Polzähnen 109, 111, 113, 115, 117, 119, 121, 123, 125, 127, 129, 131 abgewandten Enden mit Einsteckschuhen 133, 135, 137, 139, 141, 143, 145, 147, 149, 151, 153, 155 versehen sind, welche in Führungsnuten 157 in der Oberfläche 83 des Rückschlußteiles 81 einpreßbar sind. Zu diesem Zweck weisen die Einsteckschuhe 133 - 155 der Statorpole 85 - 107 und die Führungsnuten 157 in dem Rückschlußteil 81 eine schwalbenschwanzähnliche Form auf.

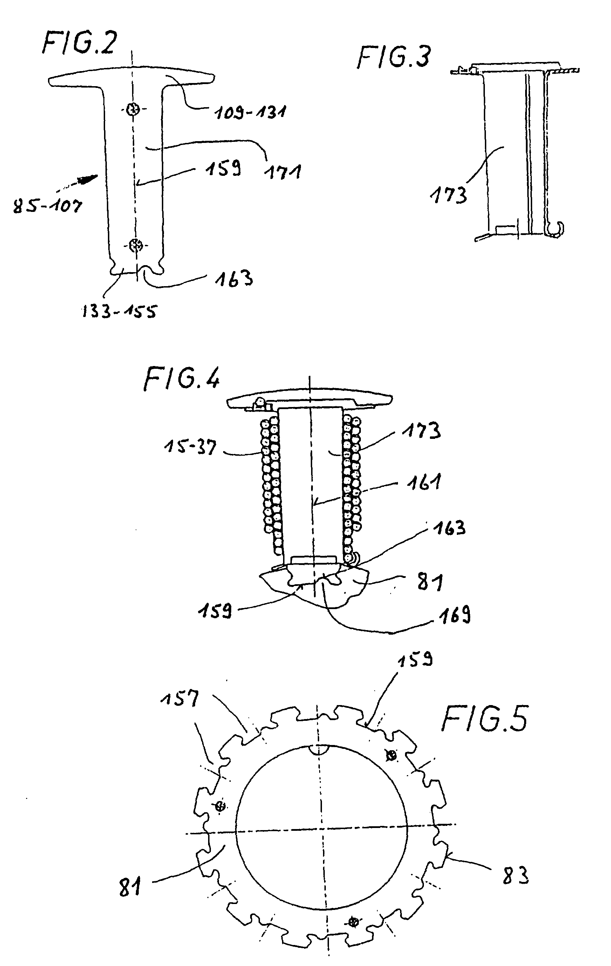

Das Einpressen der Einsteckschuhe 133 - 155 in die Führungsnuten 157 des Rückschlußteiles 81 wird dadurch erleichtert, daß die Fügelinie 159 gemäß Figur 4 zwischen den Einsteckschuhen 133 - 155 und den Führungsnuten 157 teilweise einen Luftspalt aufweist. Hierdurch wird ein Preßsitz der Einsteckschuhe 133 - 155 in den Führungsnuten 157 nur in Teilbereichen erzielt. Hierdurch werden Einpreßkräfte und Verformungen reduziert.

Weiterhin ist die Fügelinie 159 zwischen den Statorpolen 85 - 107 und dem Rückschlußteil 81 unsymmetrisch zu den Statorpolachsen 161 angeordnet, wodurch das Einschieben der Statorpole 85 - 107 in die Führungsnuten 157 des Rückschlußteiles 81 immer nur von einer Seite möglich ist. Dieses ist in Bezug auf eventuelle vorhandene Stanzgrate an den Statorpolen 85 - 107 und / oder dem Rückschlußteil 81 vorteilhaft.

Die unsymmetrische Anordnung der Fügelinie 159 wird auf einfachste Weise dadurch erzielt, daß die Einsteckschuhe 133 - 155 der Statorpole 85 - 107 zu den Statorpolachsen 161 exzentrisch angeordnete Vertiefungen 163 aufweisen. Beim Einpressen der Statorpole 85 - 107 in die Führungsnuten 157 des Rückschlußteiles 81 sind die Vertiefungen 163 in axial ausgerichtete Erhöhungen 169 in den Führungsnuten 157 formschlüssig aufschiebbar.

Vorteilhaft werden die Statorpole 85 - 107 in die Führungsnuten 157 des Rückschlußteiles 81 erst eingepreßt, wenn deren Polkern 171 mit einem Spulenkörper 173 versehen und auf diesem bereits die zugehörige Statorwicklungsspule 15 - 37 aufgewickelt ist. Hierdurch ergibt sich der Vorteil, daß eine Lagenwicklung mit hohem Nutfüllfaktor möglich ist. Weiterhin ist hierdurch ein kleinerer Nutschlitz verwendbar als dieses beim Wickeln durch die Nutschlitze möglich wäre. Die Spulenkörper 173 können aus Kunststoffspritzteilen bestehen, welche über die Einsteckschuhe 133 - 155 auf die Polkerne 171 der Statorpole 85 - 107 fest angeordnet werden.

Ein weiterer Vorteil des Einpressens der Statorpole 85 - 107 mit den bereits auf den Spulenkörpern 173 aufgewickelten Wicklungsspulen 15 - 37 in die Führungsnuten 157 des Rückschlußteiles 81 besteht darin, daß die Abstandsschlitze 175 zwischen den Polzähnen 109 - 131 in Umfangsrichtung sehr schmal gehalten werden können. Hierdurch werden die Laufgeräusche des EC-Motors merklich reduziert.

Der erfindungsgemäße EC-Motor zeichnet sich durch eine flache axiale Bauform und einen geräuscharmen Lauf aus und ermöglicht eine automatische Fertigung.

Die Erfindung ist nicht auf das beschriebene Ausführungsbeispiel beschränkt. So können der Außenrotor 5 eine andere Polpaarzahl und der Stator 7 eine entsprechend geänderte Anzahl von parallel geschalteten Wicklungsspulen pro Wicklungsstrang aufweisen. Des weiteren kann der EC-Motor als Antriebsmotor auch in Gebläsen oder in sonstigen technischen Geräten eingesetzt werden.

## Patentansprüche

1. Bürstenloser, elektronisch kommutierter Motor, insbesondere als Antriebsmotor für einen Kfz- Lüfterantrieb mit einem permanentmagnetischen Außenrotor, in dem ein Stator mit drei um 120°el versetzten Wickhmgssttängen angeordnet ist, wobei 0,5 Spulen je Pol und Strang gewickelt sind und jeder Wickhmgsstrang aus mehreren Wicklungsspulen besteht, deren Spulenweite kleiner als die Polteilung ist und die in Wicklungsnuten des Stators eingelegt sind, wobei jeder Wicklungsstrang aus mehreren parallel geschalteten Wicklungsspulen (15, 17, 19, 21, 23, 25, 27, 29, 31, 33, 35, 37) besteht und wobei eine Schaltplatte (63) mit Stromschienen (67, 69, 71, 73) zur Verbindung der einzelnen Wicklungsspulen (15, 17, 19, 21, 23, 25, 27, 29, 31, 33, 35, 37) vorgesehen ist, **dadurch gekennzeichnet, daß** die Schaltplatte (63) vier Stromschienen (67, 69, 71, 73) aufweist, von denen jedem der drei Wicklungsstränge (9, 11, 13) je eine Stromschiene (67,69, 71) zum Verbinden der Anfänge der parallel geschalteten Wicklungsspulen (15 - 37) zugeordnet ist, und daß die vierte Stromschiene (73) zum Verbinden des Sternpunktes (75) mit den Enden (77) aller Wicklungsspulen (15 - 37) der drei Wicklungsstränge (9, 11, 13) dient und daß der Außenrotor (5) mindestens p = 3 Polpaare aufweist.

2. Motor nach Anspruch 1, **dadurch gekennzeichnet, daß** jeder Wicklungsstrang (9, 11, 13) aus vier parallel geschalteten Wicklungsspulen (15, 17,19, 21, 23, 25, 27, 29, 31, 33, 35, 37) besteht

3. Motor nach Anspruch 1 oder 2, **dadurch gekennzeichnet, daß** die Spulenweite jeder Wicklungsspule (15, 17, 19, 21, 23, 25, 27, 29, 31, 33, 35, 37) 2/3 der Polteilung beträgt.

4. Motor nach Anspruch 1, 2, oder 3, **dadurch gekennzeichnet, daß** in jeder Wicklungsnut (39, 41, 43, 45, 47, 49, 51, 53, 55, 57, 59, 61) je eine Spulenseite von zwei unterschiedlichen Wicklungssträngen (9, 11, 13) angeordnet ist.

5. Motor nach einem der vorhergehenden Ansprüche, **dadurch gekennzeichnet, daß** der Stator (7) aus einem hohlzylinderförmigen Rückschlußteil (81) mit auf dessen Außemmfangsfläche (83) in Längsrichtung angeordneten Statorpolen (85, 87, 89, 91, 93, 95, 97, 99, 101, 103, 105, 107) besteht, welche mittels einer Preßverbindung mit dem Rückschlußteil (81) fest verbunden sind.

6. Motor nach Anspruch 5, **dadurch gekennzeichnet, daß** die Statorpole (85 - 107) und das Rückschlußteil (81) aus gestanzten Blechteilen bestehen.

7. Motor nach Anspruch 5 oder 6, **dadurch gekennzeichnet, daß** die Statorpole (85 - 107) an ihren Polzähnen (109 - 131) abgewandten Enden mit Einsteckschuhen (133 - 155) versehen sind, welche in Führungsmiten (157) in der Oberfläche (83) des Rückschlußteiles (81) einpreßbar sind.

8. Motor nach Anspruch 7, **dadurch gekennzeichnet, daß** die Einsteckschuhe (133 - 155) der Statorpole (85 - 107) und die Führungsnuten (157) eine schwalbenschwanzähnliche Form aufweisen.

9. Motor nach Anspruch 8, **dadurch gekennzeichnet, daß** die Fügelinie 8159) zwischen den Einsteckschuhen (133 - 155) und den Führungsnuten (157) teilweise einen Luftspalt aufweisen, derart, daß ein Preßsitz der Einsteckschuhe (133 - 155) in den Führungsnuten (157) nur in Teilbereichen erfolgt.

10. Motor nach Anspruch 7,8 oder 9, **dadurch gekennzeichnet, daß** die Fügelinie (159) zwischen den Statorpolen (85 - 107) und dem Rückschlußteil (81) unsymetrisch zu der Statorpolachse (161) ist

11. Motor nach Anspruch 10, **dadurch gekennzeichnet, daß** die Einsteckschuhe (133 - 155) der Statorpole (85 -107) zu den Statorpolachsen (161) exzentrisch angeordnete Vertiefungen (163) aufweisen, die beim Einpressen der Statorpole (85 - 107) in die Führungsnuten (167) des Rückschlußteiles (81) auf axial ausgerichtete Erhöhungen (169) in den Führungsnuten aufschiebbar sind.

12. Motor nach einem der vorhergehenden Ansprüche, **dadurch gekennzeichnet, daß** auf den Polkernen (171) der Statorpole (85 - 107) Spulenkörper (173) für die Statorwicklungen (15 - 37) angeordnet sind, wobei die Statorwickhmgen (15 - 37) vor dem Zusammenfügen der Statorpole (85 - 107) mit dem Rückschlußteil (81) auf die Spulenkörper (173) aufwickelbar sind.

13. Motor nach Anspruch 12, **dadurch gekennzeichnet, daß** die Spulenkörper (173) aus Kunststoffspritzteilen bestehen, welche über die Einsteckschuhe (133 - 155) auf die Polkerne (171) der Statorpole (85 - 107) aufschiebbar sind.

14. Motor nach Anspruch 12, **dadurch gekennzeichnet, daß** die Spulenkörper (173) durch Umspritzen der Polkerne (171) auf den Statorpolen (85 *-* 107) fest angeordnet sind.

15. Motor nach einem der vorhergehenden Ansprüche, **dadurch gekennzeichnet, daß** der Rotor (5) 4 Polpaare und jeder Wicklungsstrang (9, 11, 13, ) 4 parallel geschaltete Wicklungsspulen (15 -37) für einen 12-nutigen Stator aufweist.

16. Motor nach einem der vorhergehenden Ansprüche, **dadurch gekennzeichnet, daß** der Motorflansch (79) in Strömungsrichtung der Luft vornliegend angeordnet ist, so daß Befestigungsstrebe und Luftführung (Zarge) aus einem Teil bestehen und platzsparend ausgebildet sind.

## Claims

1. A brushless, electronically commutated motor, especially in the form of a drive motor for driving a fan in a motor vehicle, comprising a permanent magnetic outer rotor in which there is arranged a stator having three phase windings that are mutually displaced by 120°, wherein 0.5 coils are wound for each pole and phase and each phase winding consists of a plurality of coil windings which are inserted into winding slots in the stator whilst the coil width thereof is smaller than the pole pitch, wherein each phase winding consists of a plurality of parallel connected coil windings (15, 17, 19, 21, 23, 25, 27, 29, 31, 33, 35, 37) and wherein there is provided a circuit board (63) comprising bus bars (67, 69, 71, 73) for the connection of the individual coil windings (15, 17, 19, 21, 23, 25, 27, 29, 31, 33, 35, 37), **characterized in that** the circuit board (63) comprises four bus bars (67, 69, 71, 73) of which a respective bus bar (67, 69, 71) is assigned to each of the three phase windings (9, 11, 13) for connecting the starts of the parallel connected coil windings (15 - 37), and **in that** the fourth bus bar (73) serves for connecting the neutral point (75) to the ends (77) of each of the coil windings (15 - 37) of the three phase windings (9, 11, 13) and **in that** the outer rotor (5) comprises at least p = 3 pairs of poles.

2. A motor in accordance with Claim 1, **characterized in that** each phase winding (9, 11, 13) consists of four parallel connected coil windings (15, 17, 19, 21, 23, 25, 27, 29, 31, 33, 35, 37).

3. A motor in accordance with Claim 1 or 2, **characterized in that** the coil width of each coil winding (15, 17, 19, 21, 23, 25, 27, 29, 31, 33, 35, 37) amounts to 2/3 of the pole pitch.

4. A motor in accordance with Claim 1, 2, or 3, **characterized in that** a respective coil side of two different phase windings (9, 11, 13) is arranged in each winding slot (39, 41, 43, 45, 47, 49, 51, 53, 55, 57, 59, 61).

5. A motor in accordance with any of the preceding Claims, **characterized in that** the stator (7) consists of a hollow cylindrical rear closure member (81) upon the outer circumferential surface whereof (83) there are arranged in the longitudinal direction stator poles (85, 87, 89, 91, 93, 95, 97, 99, 101, 103, 105, 107) which are firmly connected to the rear closure member (81) by means of a press connection.

6. A motor in accordance with Claim 5, **characterized in that** the stator poles (85 - 107) and the rear closure member (81) consist of stamped sheet metal members.

7. A motor in accordance with Claim 5 or 6, **characterized in that** the ends of the stator poles (85 - 107) remote from the pole teeth (109 - 131) thereof are provided with plug-in shoes (133 - 155) which are adapted to be pressed into guide slots (157) in the surface (83) of the rear closure member (81).

8. A motor in accordance with Claim 7, **characterized in that** the plug-in shoes (133 - 155) of the stator poles (85 - 107) and the guide slots (157) have a shape similar to that of a dove tail.

9. A motor in accordance with Claim 8, **characterized in that** the joint lines 8159) [sic] between the plug-in shoes (133 - 155) and the guide slots (157) partly comprise an air gap in a manner such that a press fit of the plug-in shoes (133 - 155) in the guide slots (157) will only occur in partial regions thereof.

10. A motor in accordance with Claim 7, 8 or 9, **characterized in that** the joint line (159) between the stator poles (85 - 107) and the rear closure member (81) is asymmetric relative to the axes (161) of the stator poles.

11. A motor in accordance with Claim 10, **characterized in that** the plug-in shoes (133 - 155) of the stator poles (85 - 107) comprise depressions (163) which are arranged eccentrically relative to the axes (161) of the stator poles and which are adapted to be pushed onto axially aligned elevations (169) in the guide slots during the process of pressing the stator poles (85 - 107) into the guide slots (167) of the rear closure member (81).

12. A motor in accordance with any of the preceding Claims, **characterized in that** coil formers (173) for the stator windings (15 - 37) are arranged on the pole cores (171) of the stator poles (85 - 107), whereby the stator windings (15 - 37) are adapted to be wound on the coil formers (173) prior to the stator poles (85 -107) being fitted to the rear closure member (81).

13. A motor in accordance with Claim 12, **characterized in that** the coil formers (173) consist of plastic injection mouldings which are adapted to be pushed over the plug-in shoes (133 - 155) onto the pole cores (171) of the stator poles (85-107).

14. A motor in accordance with Claim 12, **characterized in that** the coil formers (173) are firmly arranged on the stator poles (85 - 107) by a process of injection moulding around the pole cores (171).

15. A motor in accordance with any of the preceding Claims, **characterized in that** the rotor (5) comprises 4 pairs of poles and each phase winding (9, 11, 13) comprises 4 parallel connected coil windings (15 - 37) for a 12 slot stator.

16. A motor in accordance with any of the preceding Claims, **characterized in that** the motor flange (79) is arranged forwardly in the direction of flow of air so that the mounting struts and air supply means (frame) consist of a single part and are formed in space-saving manner.

## Revendications

1. Moteur sans balais à commutation électronique, notamment utilisé comme moteur d'entraînement pour un dispositif d'entraînement de ventilateur de véhicule automobile comportant un moteur extérieur à aimants permanents et dans lequel est disposé un stator comportant trois faisceaux d'enroulement décalés de 120° électriques, et dans lequel 0,5 bobine est enroulée par pôle et par faisceau et chaque faisceau d'enroulement est constitué de plusieurs spires d'enroulement, dont la largeur est inférieure au pas polaire et qui sont insérées dans des encoches d'enroulement du stator, et dans lequel chaque faisceau d'enroulement est constitué de plusieurs bobines d'enroulement branchés en parallèle (15, 17, 19, 21, 23, 25, 27, 29, 31, 33, 35, 37) et dans lequel il est prévu une plaque de commutation (63) comportant des rails conducteurs (67, 69, 71, 73) pour relier les différentes spires d'enroulement (15, 17, 19, 21, 23, 25, 27, 29, 31, 33, 35, 37), **caractérisé en ce que** la plaque de commutation (63) comporte quatre rails conducteurs (67, 69, 71, 73), qu'un rail conducteur respectif (67, 69, 71) parmi les rails conducteurs servant à relier les débuts des bobines d'enroulement branchées en parallèle (15-37) est associé à chacun des trois faisceaux d'enroulement (9, 11, 13), et que le quatrième rail conducteur (73) est utilisé pour relier le neutre (75) aux extrémités (77) de toutes les bobines d'enroulement (15-37) des trois faisceaux d'enroulement (9, 11, 13) et que le rotor extérieur (5) comporte au moins p = 3 paires de pôles.

2. Moteur selon la revendication 1, **caractérisé en ce que** chaque faisceau d'enroulement (9, 11, 13) est constitué de quatre bobines d'enroulement (15, 17, 19, 21, 23, 25, 27, 29, 31, 33, 35, 37) branchées en parallèle.

3. Moteur selon la revendication 1 ou 2, **caractérisé en ce que** la largeur de chaque bobine d'enroulement (15, 17, 19, 21, 23, 25, 27, 29, 31, 33, 35, 37) est égale aux 2/3 du pas polaire.

4. Moteur selon la revendication 1 ou 3, **caractérisé en ce que** respectivement un côté de bobine de deux faisceaux d'enroulement (9, 11, 13) sont disposés dans chaque encoche d'enroulement (39, 41, 43, 45, 47, 49, 51, 53, 55, 57, 59, 61).

5. Moteur selon l'une des revendications précédentes, **caractérisé en ce que** le stator (7) est constitué par une partie de forme cylindrique creuse de retour de flux (81) comportant des pôles statoriques (85, 87, 89, 91, 93, 95, 97, 99, 101, 103, 105, 107) disposés sur sa surface périphérique extérieure (83) et qui sont reliés de façon fixe à la partie de retour de flux (93) au moyen d'une liaison tressée.

6. Moteur selon la revendication 5, **caractérisé en ce que** les pôles statoriques (85-107) et la partie de retour de flux (81) sont constitués par des pièces de tôle découpées.

7. Moteur selon la revendication 5 ou 6, **caractérisé en ce que** les pôles statoriques (85-107) comportent, sur leurs extrémités tournées à l'opposé des dents polaires (109-131), des sabots d'enfichage (133-155), qui peuvent être enfoncés dans des rainures de guidage (157) formées dans la surface (83) de la partie de retour de flux (51).

8. Moteur selon la revendication 7, **caractérisé en ce que** les sabots d'enfichage (133-155) des pôles statoriques (85-107) et les rainures de guidage (157) possèdent une forme semblable à une forme en queue d'aronde.

9. Moteur selon la revendication 8, **caractérisé en ce que** la ligne de jonction (159) entre les sabots d'enfichage (133-155) et les rainures de guidage (157) possèdent en partie un entrefer de telle sorte qu'on obtient un ajustement serré des sabots d'enfichage (133-155) dans les rainures de guidage (157) uniquement dans des zones partielles.

10. Moteur selon la revendication 7, 8 ou 9, **caractérisé en ce que** la ligne de jonction (150) entre les pôles statoriques (85-107) et la partie de retour de flux (80) est dissymétrique par rapport à l'axe (161) des pôles du stator.

11. Moteur selon la revendication 10, **caractérisé en ce que** les sabots d'enfichage (133-153) des pôles statoriques (85, 107) comportent les renfoncements (160) qui sont disposés d'une manière excentrique par rapport aux axes (161) des pôles du stator et qui lors de l'enfoncement des pôles statoriques (85-107) dans les rainures de guidage (166) de la partie de retour de flux (81), peuvent être emmanchés sur des renflements dirigés axialement (169) dans les rainures de guidage.

12. Moteur selon l'une des revendications précédentes, **caractérisé en ce que** sur les noyaux polaires (171) des pôles statoriques (85-107) sont disposés des corps de bobine (173) pour les enroulements statoriques (15-37), les enroulements statoriques (15, 37) pouvant être enroulés sur les corps de bobine (173) avant l'assemblage des pôles statoriques (85-107) avec la partie de retour de flux (81).

13. Moteur selon la revendication 12, **caractérisé en ce que** les corps de bobine (173) sont constitués par des pièces polaires en matière plastique, qui peuvent être emmanchées au moyen des sabots d'enfichage (133-155) sur les noyaux polaires (171) des pôles (85-107).

14. Moteur selon la revendication 12, **caractérisé en ce que** les corps de bobine (173) sont montés fixes par enrobage par injection des noyaux polaires (171), sur les pôles statoriques (85-107).

15. Moteur selon l'une des revendications précédentes, **caractérisé en ce que** le rotor (5) comporte 4 paires de pôles et que chaque faisceau d'enroulement (9, 11, 13) comporte 4 bobines d'enroulement (15-37) branchées en parallèle, pour un stator à 12 encoches.

16. Moteur selon l'une des revendications précédentes, **caractérisé en ce que** la bride (119) du moteur est disposée en avant dans la direction d'écoulement de l'air de sorte que l'entretoise de fixation et le dispositif de guidage de l'air (cadre) sont constitués d'une seule pièce et sont réalisés de manière à présenter un faible encombrement.
